Europäisches Patentamt

European Patent Office

Office européen des brevets

(11) Numéro de publication: **0 273 783 B1**

## FASCICULE DE BREVET EUROPEEN

(45) Date de publication de fascicule du brevet:
27.03.91

(51) Int. Cl.⁵: **G02B 27/00, G02B 23/10**

(21) Numéro de dépôt: **87402357.5**

(22) Date de dépôt: **21.10.87**

(54) Dispositif de visualisation à structure dissociable, notamment pour aéronef.

(30) Priorité: **28.11.86 FR 8616620**

(43) Date de publication de la demande:
**06.07.88 Bulletin 88/27**

(45) Mention de la délivrance du brevet:
**27.03.91 Bulletin 91/13**

(84) Etats contractants désignés:
**DE GB IT**

(56) Documents cités:
**EP-A- 0 119 128**
**FR-A- 2 438 278**
**GB-A- 2 076 557**

(73) Titulaire: **SEXTANT AVIONIQUE S.A.**
**Immeuble le Galilée Parc Tertiaire de Meudon 5/7 rue Jeanne Braconnier**
**F-92366 Meudon la Forêt Cédex(FR)**

(72) Inventeur: **Fagard, Pierre**
**7, rue Jules Massenet**
**F-78180 Montigny Le Bretonneux(FR)**

(74) Mandataire: **Marquer, Francis et al**
**Cabinet Moutard 35, Avenue Victor Hugo**
**F-78960 Voisins le Bretonneux(FR)**

## Description

La présente invention concerne un dispositif de visualisation permettant à un utilisateur d'observer une image lumineuse synthétique venant en superposition dans son champ naturel de vision.

On sait qu'il a déjà été proposé de nombreux dispositifs de ce genre, utilisables dans des véhicules et, en particulier, dans les aéronefs.

Ces dispositifs habituellement désignés viseurs tête haute ou viseurs tête basse selon leur mode d'implantation, font nécessairement intervenir un organe de formation d'une image tel que, par exemple, un tube cathodique ou une cellule à cristaux liquides, cet organe étant monté sur un support solidaire du véhicule, et un montage optique comprenant des moyens de collimation ainsi qu'au moins un miroir partiellement réfléchissant qui s'étend dans le champ de vision à l'extérieur de l'utilisateur pour permettre la susdite superposition.

Bien entendu, l'organe de formation de l'image doit être connecté par des liaisons électriques à une source d'alimentation en courant électrique et/ou à un dispositif générateur de symboles. Dans les viseurs grand champ, le montage optique est, quant à lui, nécessairement volumineux et, par conséquent, encombrant. Tel est notamment le cas du viseur décrit dans le brevet EP-A-l19 128.

Il s'avère que lorsqu' ils sont fixés à demeure et qu'ils ne sont pas utilisés, ces dispositifs deviennent particulièrement gênants. Outre les inconvénients résultant directement de leur encombrement dans le volume exigu de la cabine de pilotage, ils atténuent en partie la vision du pilote vers l'extérieur.

C'est la raison pour laquelle il est fréquemment demandé par les utilisateurs de pouvoir escamoter ces dispositifs lorsque leur usage n'est pas nécessaire.

Or, ceci implique la réalisation d'une structure dotée d'une cinématique appropriée pour permettre cet escamotage et garantissant un positionnement rigoureux du montage optique pendant l'utilisation. Il convient en outre de résoudre le problème posé par les liaisons électriques de l'organe de formation des images, au cours de cet escamotage.

On constate donc que toutes ces contraintes conduisent, le plus souvent, à des dispositifs lourds et volumineux, difficiles à intégrer dans de petits aéronefs.

L'invention a donc pour but de supprimer ces inconvénients. Elle propose donc un dispositif de visualisation du type de celui précédemment défini comprenant deux modules dissociables l'un de l'autre, à savoir :

- un module de génération des images servant de structure support fixe et comportant au moins une partie des susdits organes de génération des images, ce module comprenant des moyens permettant sa fixation à demeure sur un véhicule, et
- un module optique amovible incluant au moins un élément semi-réfléchissant, ce module optique étant destiné à venir s'accoupler sur le module de génération des images et a y être fixé à l'aide de moyens de verrouillage rapide aptes à être facilement actionnés par un utilisateur.

Ainsi, grâce à la structure dissociable précédemment décrite, il devient possible, lorsque le dispositif de visualisation n'est pas en service, d'ôter le module optique qui constitue la partie la plus gênante.

Il ne demeure donc plus que le module de génération de symboles qui, en raison de ses faibles dimensions, est moins gênant pour l'utilisateur.

D'une façon plus précise, le module de génération de symboles peut comprendre un boîtier renfermant les organes optiques ou optoélectroniques usuels permettant d'engendrer les symboles lumineux que l'on veut superposer à la vision de l'utilisateur, ce boîtier comprenant une face d'accouplement munie d'un orifice obturé par un élément optiquement transparent, au travers duquel passent les rayons lumineux émis par le générateur de symboles.

Dans ce cas, le module optique comprend un élément de support sur lequel est solidarisé le susdit élément semiréfléchissant, ce support étant muni d'éléments de centrage et de verrouillage permettant sa fixation rapide et facilement déconnectable sur la face d'accouplement du boîtier.

Avantageusement, les moyens de verrouillage rapide pourront consister en un accouplement à baïonnette. Dans ce cas, l'un des deux modules pourra comprendre au moins une baïonnette, tandis que l'autre module comprendra au moins une rampe sensiblement circulaire sur laquelle peut venir en appui ladite baïonnette.

L'invention peut en outre faire intervenir un étui de protection et de manutention, dans lequel le module optique peut venir se loger lorsque le dispositif de visualisation n'est pas utilisé, cet étui étant conformé de manière à permettre l'accouplement ou le désaccouplement du module optique qu'il contient, sur un module de génération des images.

A cet effet, cet étui devra alors comprendre un orifice situé au niveau de la face d'accouplement du module optique qu'il contient ainsi qu'éventuellement, un moyen de verrouillage rapide facilement déconnectable agissant sur des moyens de verrouillage correspondants prévus sur l'élément de support dudit module.

Avantageusement, les moyens de verrouillage utilisés pourront être prévus de manière à ce que le verrouillage du module optique sur le module de génération des images entraîne un déverrouillage de ce module optique, de son étui et, inversement, le verrouillage du module optique dans son étui entraîne un déverrouillage de ce module optique sur le module de génération des images.

Des modes de réalisation de l'invention seront décrits ci-après, à titre d'exemples non limitatifs, avec référence aux dessins annexés dans lesquels :

La figure 1 est une vue en perspective schématique d'un dispositif de visualisation selon l'invention ;

La figure 2 est une coupe schématique du module de génération des images et du module optique en position accouplée ;

Les figures 3 et 4 sont des vues schématiques en perspective et en coupe partielle, d'un dispositif de verrouillage de type à baïonnette utilisable pour réaliser le couplage du module optique sur le module de génération des images ;

La figure 5 est une coupe schématique d'un autre mode d'exécution du dispositif de visualisation selon l'invention.

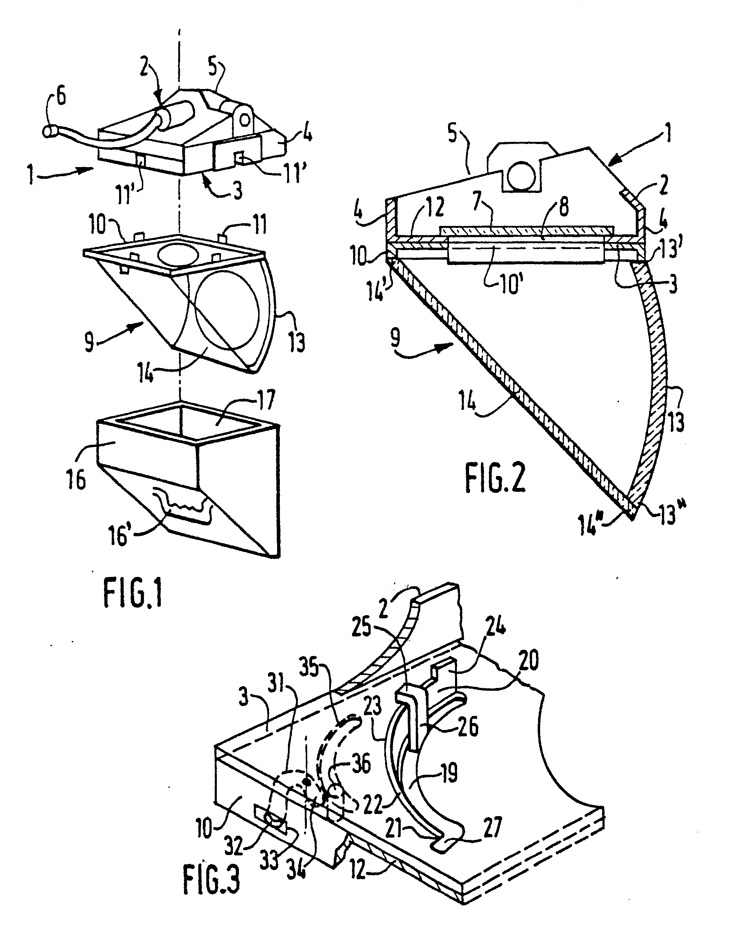

Dans l'exemple représenté sur les figures 1 et 2, le dispositif de visualisation comprend tout d'abord un module de génération des images 1 comportant un boîtier support 2 renfermant les organes habituellement utilisés pour la réalisation d'images, et muni de moyens (non représentés) permettant sa fixation à demeure sur un véhicule.

Ce boîtier 2 présente une face d'accouplement 3 (ici la face inférieure) sensiblement plane qui est bordée de faces latérales 4. De la face supérieure 5 qui présente une forme complexe, part un câble 6 assurant les liaisons électriques entre le module de génération des images et les équipements électriques et électroniques à bord du véhicule.

Dans cet exemple, l'organe de réalisation des images lumineuses consiste en une cellule à cristaux liquides 7 obturant une ouverture circulaire 8 ménagée dans la face d'accouplement 3 du boîtier 2. Bien entendu, cette cellule à cristaux liquides 7 est pilotée par un circuit électronique usuel et peut être éclairée par une source lumineuse logée à l'intérieur du boîtier.

Sur la face d'accouplement 3 peut venir s'assembler un module optique 9 comprenant un support plat 10, de mêmes dimensions que la face de couplage 3 qui présente un orifice de passage 10' des rayons lumineux émis par le module de génération des images, et est muni de tétons de centrage et de verrouillage 11 destinés à coopérer avec un système de verrouillage rapide 11' prévu sur les faces latérales 4 du boîtier 2. Ce système de verrouillage est plus particulièrement conçu de manière à assurer une bonne application et un bon centrage de la face d'accouplement 12 du support 10 sur la face d'accouplement 3 du boîtier 2.

Sur l'élément de support 10 est fixé un montage optique de type "à mélangeur courbe", faisant intervenir deux éléments (miroirs) partiellement transparents 13, 14, fixés l'un à l'autre selon une configuration diédrique, l'un de ces éléments étant au moins partiellement sphérique.

A cet effet, ces deux éléments 13, 14 comprennent chacun deux bords droits parallèles 13', 13''-14', 14'', les bords 13'', 14'' de ces deux éléments 13, 14 étant fixés l'un à l'autre, par exemple par collage, pour former l'angle du dièdre, tandis que les deux bords opposés 13', 14' sont fixés sur deux bordures opposées du support 10.

Ce montage est conçu de manière à ce que les rayons lumineux traversant la cellule à cristaux liquides soient réfléchis par le miroir plan 14 parallèlement à l'axe optique du miroir sphérique 13 et en direction de celui-ci. Grâce à ce miroir sphérique 13, l'observateur peut percevoir l'image formée par la cellule, collimatée, par exemple, à l'infini, qui vient en superposition des objets qu'il peut voir dans son champ de vision normal, au travers des miroirs 13 et 14.

Lorsque le dispositif de visualisation n'est pas utilisé, le module optique peut être logé et stocké dans son étui de protection et de manutention.

Comme on peut le voir sur la figure 1, cet étui 16 qui délimite un volume intérieur sensiblement complémentaire à celui du module optique, présente une ouverture 17 dégageant le plan de la face d'accouplement 12 du support 10, de manière à permettre l'accouplement ou le désaccouplement du module optique 9 sur le module de génération des images 1 sans avoir à ôter le module optique 9 de l'étui 16.

Avantageusement, l'étui 16 pourra en outre comprendre des moyens de fixation rapide, facilement déconnectables, au module optique 9, ainsi qu'une poignée 16' facilitant sa manutention. Cette poignée pourra éventuellement être articulée sur l'étui au moyen d'une liaison mécanique pouvant comprendre des moyens d'actionnement des moyens de fixation rapide étui/module optique et/ou module optique/module de génération des images.

Bien entendu, l'invention ne se limite pas à un type particulier de fixation rapide entre le module de génération des images 1 et le module optique 9 et entre ce dernier et l'étui 16.

Néanmoins, elle propose une solution particulièrement avantageuse dans laquelle les deux systèmes de fixation rapide interagissent de manière à obtenir un déverrouillage automatique de l'accouplement module optique 9/étui 16 lorsque le module optique 9 est verrouillé sur le module de génération des images 1.

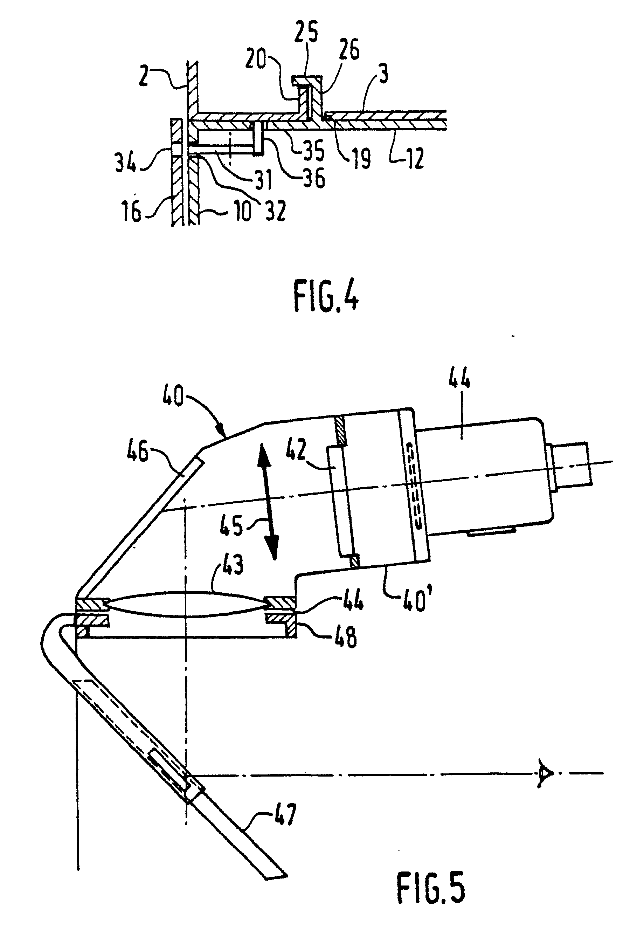

Telle qu'illustrée sur les figures 3 et 4, cette solution utilise un système de verrouillage module optique/module de génération des images, de type à baïonnette.

Ce système fait plus particulièrement intervenir au moins une découpe oblongue 19 de forme circulaire ménagée dans la face d'accouplement 3 du boîtier 2, de préférence dans une région angulaire, et dont le centre de courbure coïncide sensiblement avec le centre de la face 3.

Cette découpe oblongue 19 est bordée d'un côté par un rebord 20 qui s'étend en saillie vers l'intérieur du boîtier 2 en formant successivement, en partant de l'une de ses extrémités 21, une rampe oblique 22 puis un palier 23 terminé par une butée 24.

Ce rebord 20 forme en quelque sorte une surface de came destinée à coopérer avec une baïonnette 25 prévue à l'extrémité d'un téton 26 solidaire de la face d'accouplement 12 du support 10.

A cet effet, lors de la manoeuvre d'accouplement, ce téton 26 est engagé au travers de la découpe oblongue 19 grâce à un évasement 27 prévu au droit de l'extrémité 21 du rebord 20.

Dans cette position, les deux faces d'accouplement 3, 12 appliquées l'une contre l'autre sont sensiblement coaxiales mais décalées angulairement l'une par rapport à l'autre.

Par une rotation, on amène le support 10 en position d'accouplement. Au cours de cette rotation, la baïonnette 25 vient en prise sur le rebord 20 et exerce sur le support une traction tendant à appliquer les deux faces de couplage 3, 12 l'une contre l'autre. La course de rotation du support est interrompue par l'arrivée de la baïonnette 25 sur la butée 24, position dans laquelle les deux faces d'accouplement 3, 12 sont en coïncidence et sont fermement verrouillées l'une à l'autre.

Dans cet exemple, le verrouillage du module optique 9 sur son étui 16 est réalisé par au moins un levier coudé 31 monté rotatif avec rappel par ressort dans le support 10, à proximité du téton 26 et dont une extrémité 32 qui passe au travers d'un orifice latéral 33 du support 10 sert de pêne coopérant avec une gâche 34 formée dans l'étui 16.

L'autre extrémité 34 du levier 31 s'étend au droit d'une découpe oblongue 35 de forme circulaire réalisée dans la face d'accouplement 12 et centrée par rapport à celle-ci.

Par ailleurs, la face d'accouplement 3 du boîtier 2 est munie d'un téton 36 destiné à venir passer au travers de la découpe oblongue 35 lors de la phase d'accouplement module optique 9/module de génération des images 1.

L'agencement de ces éléments est prévu de telle manière qu'à la fin de la rotation du module optique 9 assurant son verrouillage sur le module de génération des images 1 le téton 36 entraîne en rotation le levier coudé 31 et provoque ainsi l'effacement du pêne et, par conséquent, le déverrouillage de l'étui 16.

L'invention ne se limite pas non plus à un type particulier de module optique, étant entendu cependant que celui-ci doit être compatible avec le module de génération des images.

Ainsi, la figure 5 montre un mode d'exécution d'un dispositif de visualisation dans lequel le module de génération des images 40 incorpore les éléments focalisateurs du montage optique.

Ce module 40 comporte, comme dans l'exemple précédemment décrit, à l'intérieur d'un boîtier 40' support, une source lumineuse 41 éclairant une cellule à cristaux liquides 42. Toutefois, dans ce cas, les images lumineuses formées par la cellule à cristaux liquides 42 sont collimatées par un montage optique comprenant une lentille focalisatrice 43 montée dans l'ouverture de la face d'accouplement 44 du boîtier et qui reçoit le rayonnement lumineux émis par la cellule 42 par l'intermédiaire d'une lentille 45 et d'un miroir 46.

Dans ce cas, le module optique ne comprend qu'un miroir semi-réfléchissant 47 s'étendant obliquement par rapport à l'axe optique de la lentille 43, dans le champ de vision de l'utilisateur, et porté par un support 48 venant s'accoupler au boîtier 40' grâce à des moyens de verrouillage rapides.

Bien entendu, lorsque le dispositif de visualisation n'est pas utilisé, ce module optique 47, 48 peut être logé dans un étui de protection et de manutention approprié.

## Revendications

1. Dispositif de visualisation permettant à un utilisateur d'observer une image lumineuse synthétique venant en superposition dans son champ naturel de vision, ce dispositif comprenant des organes de formation d'une image montés dans un support fixe, et un montage optique comprenant des moyens de collimation ainsi qu'au moins un miroir partiellement réfléchissant qui s'étend dans le champ de vision de l'utilisateur pour permettre ladite superposition, caractérisé en ce qu'il comprend deux modules dissociables l'un de l'autre, à savoir : un module de génération des images (1) servant de structure support fixe et comportant au moins une partie des susdits organes de génération des images (7), ce module comprenant des moyens permettant sa fixation à demeure sur un véhicule, et un module optique amovible (9) incluant au moins le susdit élément semi-réfléchissant (13, 14-47), ce module optique (9) étant destiné à venir s'accoupler sur le module de génération des images (1) et à y être fixé à l'aide de moyens de verrouillage rapide (14, 11') aptes à être facilement actionnés par un utilisateur.

2. Dispositif selon la revendication 1, caractérisé en ce que le module de génération des images (1) comprend un boîtier (2) renfermant les organes optiques ou optoélectroniques usuels permettant d'engendrer les symboles lumineux que l'on veut superposer à la vision de l'utilisateur, ce boîtier (2) comprenant une face d'accouplement (3), munie d'un orifice (8) obturé par un élément optiquement transparent (7), au travers duquel passent les rayons lumineux émis par l'organe de génération des symboles, et en ce que le module optique (9) comprend un élément de support (10) sur lequel est solidarisé le susdit élément semi-réfléchissant (13, 14-47), ce support (10) étant muni d'éléments de centrage et de verrouillage (11, 11') permettant sa fixation rapide et facilement déconnectable sur la face d'accouplement (3) du boîtier (2).

3. Dispositif selon l'une des revendications 1 et 2, caractérisé en ce que le susdit organe de génération des images comprend une cellule à cristaux liquides (7) obturant le susdit orifice (8) du boîtier (2), et en ce que le susdit module optique (9) comprend un montage optique de type "à mélangeur courbe" faisant intervenir deux éléments partiellement transparents (13, 14) fixés l'un à l'autre selon une configuration diédrique, l'un de ces éléments (13) étant au moins partiellement sphérique.

4. Dispositif selon l'une des revendications précédentes, caractérisé en ce que le susdit élément de support (10) du module optique (9) est plat et comprend un orifice de passage (10') des rayons lumineux émis par le module de génération des images (1).

5. Dispositif selon l'une des revendications 1 et 2, caractérisé en ce que le susdit module de génération des images (40) comprend à l'intérieur d'un boîtier (40') un organe de génération des images (42) associé à un montage optique incorporant des éléments focalisateurs (43, 45), et en ce que le boîtier (40') comprend pour le passage des rayons lumineux provenant de l'organe de génération des images (42), un orifice obturé par une lentille focalisatrice (43).

6. Dispositif selon l'une des revendications précédentes, caractérisé en ce que le boîtier (2) du module de génération des images (1) comprend une face d'accouplement plane (3), et l'élément de support (10) du module optique (9) présente également une face d'accouplement plane (12) destinée à venir s'appliquer sur la face d'accouplement (3) du boîtier (2).

7. Dispositif selon l'une des revendications précédentes, caractérisé en ce que les susdits moyens de verrouillage rapide facilement connectables et déconnectables consistent en un accouplement à baïonnette faisant intervenir au moins une baïonnette (25) solidaire de l'un des susdits modules (1, 9) et conçue de manière à pouvoir coopérer avec une rampe (20) sensiblement circulaire prévue sur l'autre module.

8. Dispositif selon l'une des revendications 6 et 7, caractérisé en ce que la face d'accouplement de l'un des modules comprend au moins une découpe oblongue (19) de forme circulaire bordée d'un côté par un rebord (20) formant successivement une rampe oblique (22), un palier (23) et une butée (24), et en ce que la face d'accouplement de l'autre module comprend un téton (26) muni d'une baïonnette (25) apte à être engagée au travers de ladite découpe (19) pour venir coopérer avec le susdit rebord (20), au cours d'un mouvement de rotation relatif entre les deux modules, à l'issue duquel la baïonnette (23) vient porter sur ladite butée (24), et les deux modules se trouvent en position verrouillée.

9. Dispositif selon l'une des revendications précédentes, caractérisé en ce qu'il comprend en outre un étui de protection et de manutention (16) dans lequel le module optique (9) peut venir se loger, cet étui (16) étant conformé de manière à permettre l'accouplement ou le désaccouplement du module optique (9) qu'il contient, au module de génération des images (1).

10. Dispositif selon la revendication 9, caractérisé en ce que le susdit étui (16) comprend des moyens de verrouillage rapide facilement déconnectables (34) coopérant avec des moyens de verrouillage correspondants (31) prévus sur l'élément de support (10) dudit module (9).

5

**11.** Dispositif selon l'une des revendications précédentes,
caractérisé en ce que les susdits moyens de verrouillage sont prévus de manière à ce que le verrouillage du module optique (9) sur le module de génération des images (1) entraîne un déverrouillage de ce module optique (9) de son étui (16).

**12.** Dispositif selon l'une des revendications précédentes,
caractérisé en ce que les susdits moyens de verrouillage sont prévus de manière à ce que le verrouillage du module optique (9) dans son étui (16) entraîne un déverrouillage de ce module optique (9) du module de génération des images (1).

## Claims

**1.** A display device making it possible for a user to observe a synthetic light image superimposed in his natural field of vision, this device including image forming means mounted in a fixed support and an optical mount having collimation means as well as at least one partially reflecting mirror which extends in the field of vision of the user so as to make said superimposition possible, characterized in that it comprises two dissociable modules, namely : an image generating module (1) serving as a fixed support structure and containing at least one part of said image generating means (7), said module including means for permanently fixing it to a vehicle, and a removable optical module (9) including at least said semireflecting element (13, 14-47), said optical module (9) being provided for coupling to the image generating module (1) and to be fixed thereto by rapid locking means (14, 11' ) which can be easily actuated by a user.

**2.** The device as claimed in claim 1, characterized in that said image generating module (1) includes a case (2) containing the usual optical or opto-electronic members for generating the light symbols which it is desired to superimpose on the vision of the user, this case (2) having a coupling face (3) with an orifice (8) closed by an optically transparent element (7) through which pass the light rays emitted by the symbol generating means and said optical module (9) includes a support element (10) to which said semireflecting element (13, 14-47) is fixed, this support (10) being provided with centering and locking elements (11, 11') making possible the rapid and readily disconnectable fixing thereof to the coupling face (3) of the case (2).

**3.** The device as claimed in one of claims 1 and 2, characterized in that said image generating means includes a liquid crystal cell (7) closing said orifice (8) of the case (2), and in that said optical module (9) includes an optical mount of "curved mixer" type including two partially transparent elements (13, 14) fixed to each other in a dihedral configuration, one of these elements (13) being at least partially spherical.

**4.** The device as claimed in one of the preceding claims, characterized in that said support element (10) for the optical module (9) is flat and has an orifice (10') for the passage of the light rays emitted by the image generating module (1).

**5.** The device as claimed in one of claims 1 and 2, characterized in that said image generating module (40) includes inside a case (40' ) an image generating member (42) associated with an optical mount incorporating focusing elements (43, 45), and in that said case (40' ) is formed with an orifice closed by a focusing lens ((43) for the passage of the light rays coming from the image generating member (42).

**6.** The device as claimed in one of the preceding claims, characterized in that the case (2) of said image generating module (1) has a flat coupling face (3), and the support element (10) of the optical module (9) also has a flat coupling face (12) intended to be applied against the coupling face (3) of said case (2).

**7.** The device as claimed in one of the preceding claims, characterized in that said readily connectable and disconnectable rapid locking means consist of a bayonet coupling including at least one bayonet (25) fast with one of said modules (1, 9) and designed so as to be able to cooperate with a substantially circular ramp (20) provided on the other module.

**8.** The device as claimed in one of claims 6 and 7, characterized in that the coupling face of one of the modules has at least one oblong cut out (l9) of circular shape edged on one side by a flange (20) forming successively an oblique ramp (22), a level section (23) and a stop (24), and in that the coupling face of the other module includes a stud (26) having a bayonet (25) adapted for engagement through said cut out (19) so as to cooperate with said flange (20) during a relative rotary movement between the two modules, following which the bayonet (25) comes to bear on said stop (24), and the two modules are in the locked position.

9. The device as claimed in one of the preceding claims, characterized in that it further includes a protective and handling holder (I6) in which the optical module (9) may be housed, this holder (I6) being shaped so as to make possible coupling or uncoupling of the optical module (9) which it contains to or from the image generating module (1).

10. The device as claimed in claim 9, characterized in that said holder (I6) includes readily disconnectable rapid locking means (34) cooperating with corresponding locking means (31) provided on the support element (10) of the module (9).

11. The device as claimed in one of the preceding claims, characterized in that said locking means are provided so that locking of the optical module (9) to the image generating module (1) causes unlocking of this optical module (9) from its holder (16).

12. The device as claimed in one of the preceding claims, characterized in that said locking means are provided so that locking of the optical module (9) in its holder (16) causes unlocking of this optical module (9) from the image generating module (1).

**Ansprüche**

1. Sichtvorrichtung, mittels derer ein Benutzer ein synthetisches Leuchtbild, das sein natürliches Gesichtsfeld überlagert betrachten kann, wobei besagte Vorrichtung in ein stationäres Trägerelement montierte Bilderzeugungsmittel aufweist, sowie eine optische Montage mit Kollimationsmitteln und mindestens einer.. teilweise reflektierenden Spiegel, der sich bis ins Gesichtsfeld des Benutzers erstreckt, um besagte Überlagerung zu ermöglichen, dadurch gekennzeichnet, dass sie zwei dissoziierbare Module aufweist, nämlich : einen Bilderzeugungsmodul (1), der als stationäre Trägerstruktur dient und mindestens einen Teil der besagten Bilderzeugungsmittel (7) enthält, wobei besagter Modul Mittel zur ständigen Befestigung an einem Fahrzeug aufweist ; und einen abnehmbaren optischen Modul (9), der mindestens das besagte teilweise reflektierende Element (13, 14-47) aufweist, wobei vorgesehen ist, dass besagter optischer Modul (9) mit dem Bilderzeugungsmodul (1) gekuppelt und an diesem mittels Schnellverriegelungsmitteln (14, 11'), die leicht von einem Benutzer betätigt werden können, befestigt werden kann.

2. Vorrichtung nach Anspruch 1 , dadurch gekennzeichnet, dass der Bilderzeugungsmodul (1) ein Gehäuse (2) aufweist, welches die üblichen optischen oder optoelektronischen Organe zur Erzeugung der Leuchtsymbole enthält, welche im Gesichtsfeld des Benutzers als Überlagerung erscheinen sollen und besagtes Gehäuse (2) eine Kuppelfläche (3) mit einer Öffnung (8) aufweist und diese Öffnung von einem optisch transparenten Element (7) verschlossen ist, welches die vom Symbolerzeugungsorgan abgegebenen Lichtstrahlen durchqueren und dass der optische Modul (9) ein Trägerelement (10) aufweist, an dem besagtes teilweise reflektierendes Element (13, 14-47) befestigt ist und besagtes Trägerelement (10) mit Zentrier- und Verriegelungselementen (11, 11') versehen ist, die es ermöglichen, es schnell und leicht lösbar an der Kuppelfläche (3) des Gehäuses (2) zu befestigen.

3. Vorrichtung nach einem der Ansprüche 1 und 2, dadurch gekennzeichnet, dass besagtes Bilderzeugungsorgan eine Flüssigkristallzelle (7) aufweist, welche besagte Öffnung (8) des Gehäuses (2) verschliesst und dass besagter optischer Modul (9) eine optische Montage des "gekrümmten Mischer"-typs aufweist, die zwei teilweise transparente Element (13, 14) aufweist, welche V-förmig aneinander befestigt sind, wobei eines der Elemente (13) zumindestens teilweise kugelförmig ausgebildet ist.

4. Vorrichtung nach einem der vorhergehenden Ansprüche, dadurch gekennzeichnet, dass besagtes Trägerelement (10) für den optischen Modul (9) flach ausgebildet ist und eine Durchgangsöffnung (10') für die vom Bilderzeugungsmodul (1) abgegebenen Lichtstrahlen aufweist.

5. Vorrichtung nach einem der Ansprüche 1 und 2, dadurch gekennzeichnet, dass besagter Bilderzeugungsmodul (40) im Inneren eines Gehäuses (40') ein Bilderzeugungsorgan (42) aufweist, welches einer optischen Montage, die Fokussierelemente (43, 45) enthält, zugeordnet ist und dass das Gehäuse (40') eine von einer Fokussierlinse (43) verschlossene Durchgangsöffnung für die vom Bilderzeugungsorgan (42) abgegebenen Lichtstrahlen aufweist.

6. Vorrichtung nach einem der vorhergehenden Ansprüche,
dadurch gekennzeichnet, dass das Gehäuse (2) des Bilderzeugungsmoduls (1) eine flache Kuppelfläche (3) aufweist und das Trägerelement (10) für den optischen Modul (9) gleichfalls eine flache Kuppelfläche (12) aufweist, die zur Auflage auf die Kuppelfläche (3) des Gehäuses (2) gebracht wird.

7. Vorrichtung nach einem der vorhergehenden Ansprüche,
dadurch gekennzeichnet, dass besagte Schnellverriegelungsmittel, die leicht verriegelt und entriegelt werden können, aus einer Bayonettkupplung bestehen, mit mindestens einem Bayonett (25), das fest mit einem der besagten Module (1, 9) verbunden ist und so ausgelegt ist, dass es mit einer, im wesentlichen kreisförmigen, auf dem anderen Modul vorgesehenen, Schrägfläche (20) zusammenarbeitet.

8. Vorrichtung nach einem der Ansprüche 6 und 7,
dadurch gekennzeichnet, dass die Kuppelfläche einer der Module mindestens einen länglichen, kreisförmigen Ausschnitt (19) aufweist, dessen eine Seite von einem Rand (20) begrenzt ist, der nacheinander eine Schrägfläche (22), eine Stufe (23) und einen Anschlag (24) bildet und dass die Kuppelfläche des anderen Moduls einen Zapfen (26) mit einem Bayonett (25) aufweist, das durch besagten Ausschnitt (19) geführt werden kann, um mit besagtem Rand (20) zusammenzuarbeiten, und zwar während einer relativen Schwenkbewegung der beiden Module im Verhältnis zueinander, wonach das Bayonett (25) gegen besagten Anschlag (24) anliegt und die beiden Module sich in der Verriegelungsstellung befinden.

9. Vorrichtung nach einem der vorhergehenden Ansprüche,
dadurch gekennzeichnet, dass es ausserdem eine Schutz- und Transporthülse (16) aufweist, die den optischen Modul (9) aufnehmen kann und diese Hülse (16) so gestaltet ist, dass sie die Kupplung des darin enthaltenen optischen Moduls (9) mit dem Bilderzeugungsmodul (1) und dessen Entkupplung ermöglicht.

10. Vorrichtung nach Anspruch 9,
dadurch gekennzeichnet, dass besagte Hülse (16) leicht ablösbare Schnellverriegelungsmittel (34) aufweist, die mit den entsprechenden, auf dem Trägerelement (10) des besagten Moduls (9) vorgesehenen Verriegelungsmitteln (31) zusammenarbeiten.

11. Vorrichtung nach einem der vorhergehenden Ansprüche,
dadurch gekennzeichnet, dass besagte Verriegelungsmittel so vorgesehen sind, dass die Verriegelung des optischen Moduls (9) mit dem Bilderzeugungsmodul (1) die Entriegelung dieses optischen Moduls (9) im Verhältnis zu seiner Hülse (16) bewirkt.

12. Vorrichtung nach einem der vorhergehenden Ansprüche,
dadurch gekennzeichnet, dass besagte Verriegelungsmittel so vorgesehen sind, dass die Verriegelung des optischen Moduls (9) in seiner Hülse (l6) die Entriegelung dieses optischen Moduls (9) im Verhältnis zum Bilderzeugungsmoduls (1) bewirkt.

FIG.1

FIG.2

FIG.3

FIG.4

FIG.5